(19) Europäisches Patentamt
European Patent Office
Office européen des brevets

(11) **EP 2 784 342 B1**

## (12) FASCICULE DE BREVET EUROPEEN

(45) Date de publication et mention
de la délivrance du brevet:
**18.05.2016 Bulletin 2016/20**

(51) Int Cl.:
***F16D 55/36*** *(2006.01)*     ***F16D 66/02*** *(2006.01)*

(21) Numéro de dépôt: **14158216.3**

(22) Date de dépôt: **06.03.2014**

(54) **Procédé de gestion de la durée de vie d'une pile de disques (également appelée puits de chaleur) d'un frein d'aéronef**

Verfahren zur Verwaltung der Lebensdauer eines Plattenstapels (auch Wärmesenke genannt) einer Bremse eines Luftfahrzeugs

Method for managing the service life of a stack of discs (also referred to as heat sink) of an aircraft brake

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.03.2013 FR 1352784**

(43) Date de publication de la demande:
**01.10.2014 Bulletin 2014/40**

(73) Titulaire: **Messier-Bugatti-Dowty**
**78140 Vélizy-Villacoublay (FR)**

(72) Inventeur: **Vaney, Jean-Baptiste**
**78140 VELIZY-VILLACOUBLAY (FR)**

(74) Mandataire: **Parzy, Benjamin Alain et al**
**Cabinet Boettcher**
**16, rue Médéric**
**75017 Paris (FR)**

(56) Documents cités:
**EP-A1- 2 101 077**     **FR-A1- 2 823 278**
**FR-A1- 2 847 976**     **US-A1- 2006 191 751**

**Description**

L'invention concerne un procédé de gestion de la durée de vie d'une pile de disques (également appelée puits de chaleur) d'un frein d'aéronef.

ARRIERE-PLAN TECHNOLOGIQUE

Les piles de disques s'usent régulièrement en raison des freinages effectués lors des roulages de l'aéronef au sol, que ce soit lors de l'atterrissage, ou lors du taxiage de l'aéronef. Il convient donc de changer régulièrement les piles de disques lors de la vie de l'aéronef.

Pour ce faire, diverses méthodes sont envisageables. On peut par exemple déterminer un nombre de vols au-delà duquel les piles de disques sont systématiquement changées. Cependant, cette façon de faire impose de prendre certaines marges de sécurité, compte tenu de la grande disparité constatée sur les durées de vie d'une pile de disques à l'autre. Cette méthode conduit donc à changer prématurément certaines piles de disques qui disposent encore d'un potentiel conséquent, ce qui n'est pas économique.

Une autre méthode consiste à équiper les freins d'un témoin d'usure. Les équipes de maintenance inspectent régulièrement les freins pour vérifier si telle ou telle pile de disques a ou non atteint l'usure limite. Si tel est le cas, la pile de disques usée est alors changée. Cette méthode requiert donc une inspection régulière, et ne permet pas de faire de prévisions fiables quant au potentiel de vols restant.

Le document US 2006/191 751 A1 montre un procédé de gestion de la durée de vie d'une pile de disques de frein d'aéronef.

OBJET DE L'INVENTION

L'invention vise à proposer une nouvelle méthode de gestion de la durée de vie d'une pile de disques installée sur un frein d'aéronef, qui obvie aux inconvénients précités.

PRESENTATION DE L'INVENTION

En vue de la réalisation de ce but, on propose un procédé de gestion de la durée de vie d'une pile de disques d'un frein d'aéronef équipé d'au moins un actionneur de freinage comportant un poussoir adapté à presser sélectivement la pile de disques pour générer un effort de freinage d'une roue associée, le procédé comportant les étapes suivantes, pour un vol donné de l'aéronef :

- actionner l'actionneur pour faire venir le poussoir au contact de la pile de disques ;
- en déduire une course de l'actionneur, et par différence avec une course nominale stockée en mémoire correspondant à la pile de disques neuve, en déduire une usure U de la pile de disques ;
- de l'usure U, et du nombre de vols N effectués depuis le montage de la pile de disques neuve, estimer par une méthode d'extrapolation un potentiel de vols $\Delta N$ avant que la pile de disques n'atteigne une usure maximale admissible $U_{\max}$.

Ainsi, par une mesure de l'usure actuelle et par une extrapolation, on estime un potentiel de vols que la pile de disques est capable d'assurer, au rythme d'usure constaté par la mesure. Ce procédé permet d'éviter le changement systématique de pile de disques au-delà d'un nombre de vols donné, qui n'est pas économique, mais permet également un suivi de l'usure de la pile de disques sans nécessiter une intervention d'une équipe de maintenance.

Qui plus est, le potentiel ainsi estimé pourra être transmis au pilote, mais également envoyé au centre de maintenance qui gère la maintenance de l'aéronef (de préférence de façon automatique), ce qui lui permet de programmer de façon précise le changement de pile de disques frein par frein, et permet donc une optimisation des commandes (et donc des productions) de piles de disques.

La partie d'estimation et de calcul du procédé de l'invention est de préférence implantée dans le calculateur de freinage qui gère les freins ou si le frein est électromécanique, dans l'un des contrôleurs (EMAC) reliés au frein.

Selon un mode préféré de mise en oeuvre de l'invention, l'extrapolation comprend l'utilisation d'un modèle d'usure donné $u = f(n)$, où $u$ est l'usure correspondant au nombre n de vols. Le point de fonctionnement $(U,N)$ acquis grâce au procédé de l'invention permet de recaler le modèle au fonctionnement du frein en question, par exemple par une méthode de régression. On estime alors le nombre de vols maximal par $N_{\max} = f(U_{\max})$. Le potentiel de vols restants est alors estimé par $\Delta N = N_{\max} - N$.

Par exemple, si on utilise un modèle avec une loi de puissance $u = k \cdot n^{\alpha}$, alors la constante k du modèle est donnée par $U = k \cdot N^{\alpha}$, de sorte que le modèle adapté s'écrit à l'aide de la mesure s'écrit: $u = U \cdot (n/N)^{\alpha}$. Le nombre de vols maximal $N_{\max}$ correspondant à l'usure maximale admissible $U_{\max}$ vaut $N_{\max} = (U_{\max}/U)^{1/\alpha} \cdot N$. Le potentiel de vols vaut donc $\Delta N = N_{\max} - N = ((U_{\max}/U)^{1/\alpha} - 1) \cdot N$.

De préférence alors, toutes les i mesures $(U_i, N_i)$ effectuées depuis le montage de la pile de disques sur l'aéronef sont gardées en mémoire et utilisées pour recaler le modèle au moyen d'une régression portant sur une ou plusieurs mesures antérieures $(U_i, N_i)$.

On pourra alors opérer un recalage, par exemple au moyen d'une régression par moindres carrés. Reprenant l'exemple précédent, la régression en question consiste à déterminer les paramètres $k, \alpha$ qui minimisent

la quantité $\varepsilon = \sum \left( U_i - k N_i^{\alpha} \right)^2$ , où la somme porte sur toutes les mesures retenues.

Ce recalage peut être opéré à chaque nouvelle mesure en prenant en compte toutes les mesures déjà effectuées et gardées en mémoire pour adapter au mieux le modèle à l'ensemble des mesures. Il peut en variante être opéré uniquement sur les K dernières mesures (par exemple les dix dernières mesures), pour ne tenir compte que de l'histoire récente de la pile de disques, qui semble plus importante que son passé lointain pour la prévision de sa durée de vie.

On peut encore ne mettre en oeuvre le procédé de l'invention que quand le nombre de vols depuis le montage de la pile de disques neuve atteint une quantité donnée significative de la durée de vie présumée de la pile de disques (par exemple la moitié du nombre de vol maximal attendu). On procède alors à la mise en oeuvre du procédé de l'invention pour obtenir un point de fonctionnement ($U,N$) grâce auquel le modèle est recalé.

Bien sûr, d'autres modèles d'usure pourront être utilisés.

Le compteur de vols est bien sûr remis à zéro à chaque changement de pile de disques. A cet effet, et selon un mode de mise en oeuvre particulièrement avantageux de l'invention, le compteur de vols est remis à zéro lorsque l'usure mesurée pour un vol donné est inférieure à une mesure d'usure d'un vol précédent, ce qui est le signe que la pile de disques a été changée entre les deux mesures. Dans ce cas, la course de l'actionneur correspondante est stockée en mémoire pour remplacer la course nominale qui sert de base à l'estimation de l'usure. De préférence, pour éviter tout artefact de mesure, on effectue la remise à zéro du compteur de vols uniquement lorsque l'usure mesurée est inférieure à une usure mesurée lors d'un vol précédent moins une marge donnée $\Delta u$. Par exemple, on prendra comme marge le quart ou la moitié de l'usure maximale.

Ainsi, le compteur de vols est automatiquement remis à zéro sans aucune intervention sur le calculateur de freinage.

Le procédé de l'invention peut être mis en oeuvre dès que l'actionneur de freinage est équipé d'un dispositif de mesure de la course de son poussoir. En particulier, si l'actionneur est de type électromécanique avec un moteur électrique et un organe de transmission qui transforme une rotation de l'arbre du moteur en un déplacement linéaire du poussoir, il suffira de compter le nombre de tours du moteur pour connaître la course du poussoir. En variante, l'actionneur peut être équipé d'un capteur de déplacement (par exemple un capteur de type LVDT) mesurant directement la course du poussoir.

Si le frein est équipé de plusieurs actionneurs, on effectuera de préférence la mesure selon l'invention à l'aide du même actionneur, pour que les mesures soient cohérentes entre elles. On pourra également effectuer la mesure au moyen de plusieurs actionneurs puis retenir une moyenne des mesures ainsi effectuées. De préférence, un test de cohérence sera mis en oeuvre pour écarter les mesures manifestement déviantes.

## Revendications

1. Procédé de gestion de la durée de vie d'une pile de disques d'un frein d'aéronef équipé d'au moins un actionneur de freinage comportant un poussoir adapté à presser sélectivement la pile de disques pour générer un effort de freinage d'une roue associée, le procédé comportant les étapes suivantes, pour un vol donné de l'aéronef :

   - actionner l'actionneur pour faire venir le poussoir au contact de la pile de disques ;
   - en déduire une course de l'actionneur, et par différence avec une course nominale stockée en mémoire correspondant à la pile de disques neuve, en déduire une usure actuelle (U) de la pile de disques ;
   - de l'usure actuelle, et du nombre de vols (N) effectués depuis le montage de la pile de disques neuve, estimer par une méthode d'extrapolation un potentiel de vols ($\Delta N$) avant que la pile de disques n'atteigne une usure maximale admissible ($U_{max}$).

2. Procédé selon la revendication 1, dans lequel l'extrapolation comporte l'utilisation d'un modèle d'usure ($u = f(n)$) et comprend l'étape de recaler le modèle à un point de fonctionnement constitué de l'usure mesurée et du nombre de vols effectués ($U,N$), avant d'en déduire un nombre maximal de vols ($N_{max} = f(U_{max})$), puis le potentiel de vols ($\Delta N = N_{max} - N$).

3. Procédé selon la revendication 2, dans lequel l'étape de recalage du modèle prend en compte une ou plusieurs autres mesures antérieures ($U_i, N_i$) effectuées lors de vols précédents et gardées en mémoire.

4. Procédé selon la revendication 3, dans lequel pour le recalage n'est pris en compte qu'un nombre donné (K) de mesures antérieures formant les dernières mesures gardées en mémoire.

5. Procédé selon la revendication 3, dans lequel le recalage du modèle est effectué à chaque vol en tenant compte de toutes les mesures antérieures ($U_i, N_i$).

6. Procédé selon la revendication 1, dans lequel l'estimation du potentiel de vols n'est réalisée qu'après un certain nombre de vols après le montage d'une pile de disques neuves.

7. Procédé selon la revendication 1, dans lequel on remet à zéro un compteur du nombre de vols à chaque changement de la pile de disques.

**8.** Procédé selon la revendication 7, dans lequel le compteur de vols est remis à zéro lorsque l'usure mesurée pour un vol donné est inférieure à une mesure d'usure d'un vol précédent.

**9.** Procédé selon la revendication 8, dans lequel on effectue la remise à zéro du compteur de vols uniquement lorsque l'usure mesurée est inférieure à une usure mesurée lors d'un vol précédent moins une marge donnée $(\Delta u)$.

**10.** Procédé selon la revendication 1, dans lequel la course nominale stockée en mémoire est remplacée par une mesure de course effectuée après un changement de la pile de disques.

**Patentansprüche**

**1.** Verfahren zum Verwalten der Lebensdauer eines Stapels von Scheiben einer Luftfahrzeugbremse, die mit mindestens einem Bremsaktor ausgestattet ist, der einen Stößel umfasst, der dazu geeignet ist, den Stapel von Scheiben selektiv zu pressen, um eine Bremskraft zum Bremsen eines zugeordneten Rades zu erzeugen, wobei das Verfahren für einen gegebenen Flug des Luftfahrzeugs die folgenden Schritte umfasst:

- Betätigen des Aktors, um den Stößel in Kontakt mit dem Stapel von Scheiben zu bringen,
- daraus Ableiten eines Hubes des Aktors und mittels Differenzbildung mit einem im Speicher abgespeicherten Nennhub, der dem neuen Stapel von Scheiben entspricht, daraus Ableiten einer aktuellen Abnutzung (U) des Stapels von Scheiben,
- anhand der aktuellen Abnutzung und der Anzahl an Flügen (N), die seit der Montage des neuen Stapels von Scheiben durchgeführt wurden, Schätzen mittels eines Extrapolationsverfahrens eines Potentials an Flügen ($\Delta N$), bevor der Stapel von Scheiben eine zulässige maximale Abnutzung ($U_{max}$) erreicht.

**2.** Verfahren nach Anspruch 1, wobei die Extrapolation die Nutzung eines Abnutzungsmodells (u=$f(n)$) umfasst und den Schritt des Neueinstellens des Modells auf einen Betriebspunkt einschließt, der aus der gemessenen Abnutzung und der Anzahl an durchgeführten Flügen ($U,N$) gebildet ist, bevor daraus eine maximale Anzahl an Flügen ($N_{max} = f(U_{max})$) und daraufhin das Potential an Flügen ($\Delta N = N_{max} - N$) abgeleitet wird.

**3.** Verfahren nach Anspruch 2, wobei der Schritt des Neueinstellens des Modells eine oder mehrere weitere frühere Messungen ($U_i$, $N_i$) berücksichtigt, die während vorangegangener Flüge durchgeführt und im Speicher abgespeichert wurden.

**4.** Verfahren nach Anspruch 3, wobei für die Neueinstellung nur eine gegebene Anzahl (K) von früheren Messungen berücksichtigt wird, die die letzten im Speicher abgespeicherten Messungen bilden.

**5.** Verfahren nach Anspruch 3, wobei die Neueinstellung des Modells bei jedem Flug erfolgt, indem alle früheren Messungen ($U_i$, $N_i$) berücksichtigt werden.

**6.** Verfahren nach Anspruch 1, wobei die Schätzung des Potentials an Flügen nur nach einer gewissen Anzahl von Flügen nach der Montage eines Stapel neuer Scheiben durchgeführt wird.

**7.** Verfahren nach Anspruch 1, wobei man einen Zähler zum Zählen der Anzahl der Flüge bei jedem Wechsel des Stapels von Scheiben auf Null zurücksetzt.

**8.** Verfahren nach Anspruch 7, wobei der Zähler zum Zählen der Flüge auf Null zurückgesetzt wird, wenn die gemessene Abnutzung für einen gegebenen Flug kleiner als eine Abnutzungsmessung eines vorangegangenen Fluges ist.

**9.** Verfahren nach Anspruch 8, wobei man das Zurücksetzen des Flugzählers auf Null nur dann durchführt, wenn die gemessene Abnutzung kleiner als eine gemessene Abnutzung während eines vorangegangenen Fluges weniger einer gegebenen Spanne ($\Delta u$) ist.

**10.** Verfahren nach Anspruch 1, wobei der im Speicher abgespeicherte Nennhub nach einem Wechsel des Stapels von Scheiben durch eine durchgeführte Hubmessung ersetzt wird.

**Claims**

**1.** A method of managing the lifetime of a stack of disks of an aircraft brake having at least one braking actuator including a pusher adapted to press selectively against the stack of disks in order to generate a braking force for an associated wheel, the method comprising the following steps, for a given flight of the aircraft:

· actuating the actuator to cause the pusher to come into contact with the stack of disks;
· deducing therefrom a stroke of the actuator, and by taking the difference with a nominal stroke stored in memory corresponding to the stack of disks when new, deducing a current level of wear (U) for the stack of disks;
· from the current level of wear and from the number of flights (N) flown since the new stack of disks was mounted, using an extrapolation method to estimate a potential number of flights ($\Delta N$) before the stack of disks reaches a maximum acceptable level of wear ($U_{max}$).

**2.** A method according to claim 1, wherein the extrapolation comprises using a wear model (u =f (n)) and includes the step of recalibrating the model on an operating point constituted by the measured level of wear and the number of flights flown (U,N), before deducing therefrom a maximum number of flights ($N_{max} = f (U_{max})$) , and then deducing the potential number of flights ($\Delta N = N_{max} - N$).

**3.** A method according to claim 2, wherein the step of recalibrating the model takes account of one or more other measurements ($U_i, N_i$) performed earlier during preceding flights and stored in memory.

**4.** A method according to claim 3, wherein the recalibration takes account of a given number (K) of earlier measurements forming the most recent measurements stored in memory.

**5.** A method according to claim 3, wherein the model is recalibrated on each flight by taking account of all of the earlier measurements ($U_i$, $N_i$).

**6.** A method according to claim 1, wherein the potential number of flights is estimated only after flying a certain number of flights since a new stack of disks was mounted.

**7.** A method according to claim 1, wherein a flight number counter is reset to zero on each occasion the stack of disks is changed.

**8.** A method according to claim 7, wherein the flight counter is reset to zero when the level of wear measured for a given flight is less than a level of wear measured for a preceding flight.

**9.** A method according to claim 8, wherein the flight number counter is reset to zero only when the measured level of wear is less than a level of wear measured during a preceding flight minus a given margin ($\Delta u$).

**10.** A method according to claim 1, wherein the nominal stroke stored in memory is replaced by a stroke measurement performed after changing the stack of disks.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2006191751 A1